# EUROPÄISCHE PATENTSCHRIFT

(11) **EP 4 529 084 B1**
(45) Veröffentlichungstag und Bekanntmachung des Hinweises auf die Patenterteilung: **18.02.2026**
(21) Anmeldenummer: 25151246.3
(22) Anmeldetag: 28.09.2018
(51) Int. Cl.: G06F 16/901, G06F 16/22, H04L 9/32

(54) **DATENBANKSYSTEM FÜR EIN SOZIALES NETZWERK MIT VERWENDUNG VON BLOCKCHAIN-TECHNOLOGIE**
SOCIAL NETWORK DATABASE SYSTEM USING BLOCKCHAIN TECHNOLOGY
SYSTÈME DE BASE DE DONNÉES DE RÉSEAU SOCIAL UTILISANT UNE TECHNOLOGIE DE CHAÎNE DE BLOCS

(43) Veröffentlichungstag der Anmeldung: 26.03.2025
(62) Teilanmeldung aus: 18780105.5
(73) Patentinhaber: GloBra GmbH, 5020 Salzburg (AT)
(72) Erfinder: Pinegger, Wolfgang, 8971 Schladming-Rohrmoos (AT)
(74) Vertreter: 2s-ip Schramm Schneider Bertagnoll Patent- und Rechtsanwälte Part mbB

(56) Entgegenhaltungen:
- US-A1- 2016 323 109
- ANTORWEEP CHAKRAVORTY ET AL: "Ushare : user controlled social media based on blockchain", PROCEEDINGS OF THE 11TH INTERNATIONAL CONFERENCE ON UBIQUITOUS INFORMATION MANAGEMENT AND COMMUNICATION, IMCOM '17, 7 January 2017 (2017-01-07), New York, New York, USA, pages 1 - 6, XP055583421, ISBN: 978-1-4503-4888-1, DOI: 10.1145/3022227.3022325

## Beschreibung

Die vorliegende Erfindung betrifft ein Datenbanksystem für ein soziales Netzwerk und ein Verfahren zum Bereitstellen eines sozialen Netzwerks.

Die bekannten sozialen Netzwerke und Online-Marktplätze nehmen die Daten der Nutzer und legen für sich selbst ein algorithmisch auswertbares Nutzerprofil an. Die Daten gehören damit dem Betreiber, nicht mehr dem Nutzer. Er kann nur wenig ändern, alles bleibt auf den Servern des Betreibers gespeichert. Jegliche weitere Aktivität des Nutzers wird in seinem Profil festgehalten und ausgewertet. Oft geschieht das auch über einen Zugang auf den Rechner des Nutzers, wobei weitere Daten des Nutzers (Fotos, Mediathek und Kontakte) dem Profil hinzugefügt werden. Des Weiteren werden im Hintergrund Daten zwischen mehreren Anbietern ausgetauscht, um an weitere Daten des Nutzers zu gelangen und ein sich immer weiter verbesserndes und umfassenderes Profil zu erhalten. Mit diesen Daten wird nun ein algorithmisch betriebenes Geschäftsmodell betrieben, in welchem dem Nutzer, wenn er sich einloggt, Dinge, die vermeintlich für ihn relevant sind und ihn interessieren, angezeigt werden beziehungsweise werden die so erhaltenen Daten anderweitig kommerziell genutzt.

Alles basiert nun auf diesen sich ständig erweiternden Profildaten. Ein Löschen von Daten oder des gesamten Profils bringt nichts, denn das Nutzerprofil bleibt immer im System erhalten.

ANTORWEEP CHAKRAVORTY ET AL, "Ushare: user controlled social media based on blockchain", PROCEEDINGS OF THE 11TH INTERNATIONAL CONFERENCE ON UBIQUITOUS INFORMATION MANAGEMENT AND COMMUNICATION, IMCOM '17, New York, New York, USA, 07.01.2017, doi:10.1145/3022227.3022325, ISBN 978-1-4503-4888-1, Seite 1-6, betrifft ein nutzergesteuertes soziales Netzwerk auf Blockchain-Basis. Das dortige soziale Netzwerk ermöglicht Nutzern, das Eigentum jedes geteilten Stücks Inhalt zu beherrschen, nachzuverfolgen und als Eigenes zu beanspruchen. Die Technik des Datenbanksystems ist nicht weiter spezifiziert.

US2016323109 A1 betrifft Systeme und Methoden zur Verwaltung von Medien, beispielsweise digitalen Inhalten, unter Verwendung der Blockchain-Technologie. In einigen Ausführungsformen führen die Systeme und Methoden mehrere digitale Währungsübertragungen zwischen Adressknoten durch, um eine Sammlung von Rechten an einem digitalen Inhaltselement in einer Blockkette zu registrieren, und führen eine digitale Währungsübertragungstransaktion zwischen Adressknoten durch, um die Sammlung von Rechten in der Blockkette zu registrieren.

Relationale Datenbanksysteme sind allgemeinbekannt.

Die vorliegende Erfindung hat sich zur Aufgabe gesetzt, ein Datenbanksystem für ein soziales Netzwerk und ein Verfahren zum Bereitstellen eines sozialen Netzwerks bereitzustellen, bei welchen der Nutzer seine Daten selbst beherrscht und Zugriff auf geteilte Daten in dem Datenbanksystem einfach durchgeführt werden kann.

Diese Aufgabe wird durch die in den Ansprüchen definierten Systeme und Verfahren gelöst.

Vorteilhafte Weiterbildungen der Erfindung sind in den abhängigen Ansprüchen definiert.

Das erfindungsgemäße Datenbanksystem und das Verfahren basieren auf einem Konzept, welches die vom Eigentümer der Daten mit Inhalten gefüllten Datenblöcke über vorbestimmte beziehungsweise festgelegte Datenketten verbindet und, wenn von den beteiligten Nutzern gewünscht, diese Daten an anderer Stelle des Netzwerkes speichert wo sie nur mehr für die berechtigten Nutzer einsehbar sind aber keiner weiteren Änderungsmöglichkeit unterliegen, und von da verschlüsselt und in eine externe Blockchain überleitet werden können.

Hierbei werden die Zeilen und Spalten der Tabellen und damit deren Inhalte (Datenblöcke) über diese Datenketten verbunden. Diese Datenketten verarbeiten einerseits standardisierte Anwendungen, die das erfindungsgemäße soziale Netzwerk seinen Nutzern anbietet, wie die Festlegung von Geografie oder Sprache, oder die Möglichkeit einem anderen Nutzer als Autor zu folgen oder ein Online-Shop oder ein Angebot als Favorit zu speichern, und solche, denen die jeweils anderen beteiligten Nutzer zustimmen müssen wie im Fall einer Freundschaftsverbindung.

Darüber hinaus erlaubt die Datenbank des erfindungsgemäßen sozialen Netzwerks die Festlegung zusätzlicher, die Standard-Datenketten überlagernder Datenketten entsprechend den Wünschen der Betreiber von großen Communities im Netzwerk. Diese kundenbezogenen Datenketten vergeben an ihre Nutzer vornehmlich bestimmte Attribute und Zertifikate und verbinden diese entsprechend.

Die Datenbank verwendet eine Datenstruktur, die es erlaubt, auf einzelne Daten zuzugreifen und diese zu identifizieren, dies immer in bestimmter Relation zu anderen Daten dieser Datenbank. Die Daten in der Datenbank werden in Datenblöcken in Tabellen mit Hunderten, Tausenden oder Millionen Zeilen gespeichert. Die Tabellen umfassen auch Spalten mit speziellen Bezeichnungen, welche spezifische Datentypen verwalten.

Die Erfindung wird anhand der Figuren näher beschrieben. Dort illustrieren
- Fig. 1: ein soziales Netzwerk mit drei exemplarischen Nutzern A, B und C und mit Daten des Nutzers A und den entsprechenden Datenketten,
- Fig. 2: einen Internal Receipt Ledger mit Überleitung in eine Blockchain im Netzwerk am Beispiel der Fig. 1; und
- Fig.3: das Verfahren gemäß der vorliegenden Erfindung.

Der erfindungsgemäße Aufbau aus Tabellen, Zeilen und Spalten wird im Folgenden Schema genannt. Die Datenbank besteht z.B. aus 10.000 Tabellen mit jeweils unlimitierten Zeilen und Spalten.

Die Datenblöcke der Datenbank können jede Art von Daten umfassen wie zum Beispiel Text, Bilder, Videos und/oder Internet-Links. Beim Netzwerk registrierte Nutzer können diese Datenblöcke für ihre eigenen Daten jederzeit frei verwenden, ihre Daten dort eingeben, ändern oder löschen und auch über die Datenketten festlegen welche anderen Nutzer welche dieser Daten sehen können.

Über solche Speicherplätze in Datenblöcken wird den Nutzern ihr eigener Platz zum Speichern ihrer Daten zur Verfügung gestellt, und über die Datenketten kann jeder Nutzer entscheiden, welche seiner eigenen Daten er welchem anderen Nutzer zur Verfügung stellt. Damit entsteht eine Verbindung zwischen Nutzern, die hier allgemein als Datenkette bezeichnet wird. Diese Datenketten werden als Relationen in der relationalen Datenbank, also als Tabellen, welche die entsprechenden Daten bzw. Datenblöcke enthalten, realisiert. Die über Datenketten verbundenen Inhalte (Daten bzw. Datenblöcke) sind exklusiv für den betreffenden Nutzer oder Nutzerkreis und können von keinem anderen Nutzer ohne die Erlaubnis des Nutzers, welchem die Daten gehören, verwendet werden. Die Daten zeigen sich auf einer vorbestimmten Oberfläche am Rechner / Tablet / Smartphone des Nutzers, können da gesehen aber nicht gespeichert werden.

Damit wird dem Nutzer die totale Eigentümerschaft und Kontrolle seiner Daten sowie die freie Festlegung des Nutzerkreises, der seine Daten sehen darf, geboten.

In den Fällen, wo diese Freiheit alle Daten jederzeit zu ändern oder zu löschen beziehungsweise den berechtigten Nutzerkreis zu ändern nachteilig ist und die beteiligten Nutzer gerade eine solche Abänderbarkeit nicht wünschen, wie zum Beispiel wenn aus Transaktionen Rechnungen oder sonstige Belege entstehen oder Zertifikate erteilt werden oder andere Vereinbarungen online getroffen werden, bietet die vorliegende Erfindung Lösungen, solche Datenblöcke und Datenketten getrennt und im System fixiert und nicht mehr abänderbar zu speichern und nur den jeweils berechtigten Nutzern zugänglich zu machen. Darüber hinaus bietet die vorliegende Erfindung die Verwendung einer Blockchain-Technologie, um solche im System gespeicherte fixierte Datenblöcke und Datenketten auf einer Blockchain unabhängig vom System zu sichern für die berechtigten Nutzer zu verwalten und nur für diese zugänglich zu machen.

Die Blockchain-Technologie wird auch für die eigene Kryptowährung des Netzwerkes verwendet und kann auch für weitere Kryptowährungen anderer Kunden des Netzwerkes verwendet werden.

Transaktionen in solchen Kryptowährungen wie die Zahlungen sowie die Bestätigung des zugrundeliegenden Geschäftes werden damit in derselben Wallet auf verschiedenen Blockchains abgebildet.

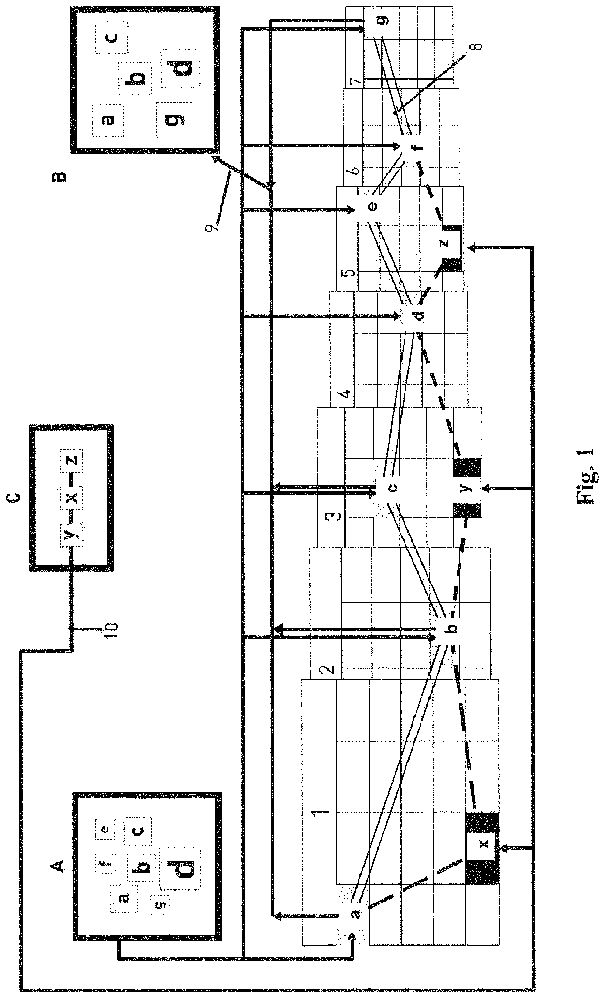

Fig. 1 zeigt eine Situation im sozialen Netzwerk, bei der ein Nutzer A seine Daten mit den Attributen a, b, c, d, e, f, g als Eigentümer in das soziale Netzwerk hineingestellt hat. Die Daten sind auf mehrere Tabellen 1 bis 7 einer relationalen Datenbank verteilt und über die Datenkette 8 verknüpft. Hierdurch entsteht eine neue Tabelle der durch die Datenkette (Relation) 8 verbundenen Daten oder Datenblöcke. Die Datenblöcke werden durch den Nutzer A als Eigentümer der Daten verwaltet, in dem Sinne, dass die Inhalte der Datenblöcke jederzeit ändern oder löschen kann und auch festlegen kann, mit welchen Nutzern einer Community er seine Daten (oder Teile davon) teilen möchte. In der Situation der Fig. 1 teilt der Nutzer A seine Daten a, b, c, d und g mit dem Nutzer B entsprechend der Datenkette 9. Es entsteht also eine weitere Tabelle mit den Daten entsprechend der Datenkette 9. Mit dem übergeordneten Nutzer C teilt A die Daten x, y und z entsprechend der Datenkette 10.

In den Tabellen, die durch diese Datenketten 9, 10 entstehen, sind auch die Nutzer B bzw. C, mit denen die Daten der jeweiligen Tabelle geteilt werden, enthalten. Die Daten der Nutzer und die Datenketten können als "Smart Contracts" zwischen den Nutzern über die Verwendung der eingegebenen Daten verstanden werden. Mit Zustimmung der jeweiligen Nutzer können Datenketten auch mit anderen Datenketten verbunden werden.

Die Datenketten 8, 9, 10 verbinden die Datenblöcke der einzelnen Tabellen, Zeilen und Spalten der Datenbank über so genannte Basisketten oder nutzerspezifische Ketten. Basisketten sind im System vorinstalliert und erlauben dem Nutzer (z.B. A), sich mit anderen Nutzern (z.B. B, C) zu verbinden, ihren Inhalten zu folgen, Produkte, Services, Jobs oder Immobilien anzubieten oder zu erwerben, Inhalte bestimmter Kategorien oder geografisch oder nach anderen Filtern zu sehen oder diese in einer bestimmten Sprache anzuzeigen.

Nutzerspezifische Ketten erlauben weitere von einem übergeordneten Nutzer für seine definierte Gemeinschaft festgelegte Verbindungen. Nutzerspezifische Datenketten für große Communities ermöglichen die Verbindung aller Nutzer unter einem übergeordneten Nutzer C in der jeweils von ihm zu definierenden Weise. Dazu stimmen alle zusätzlich über eine solche übergeordnete Datenkette verbundenen Nutzer auch im Sinne eines oder mehrerer "Smart Contracts" zu. Die Nutzer bleiben trotzdem Eigentümer ihrer Daten, in dem Sinne, dass nur sie die Rechte haben, die Daten zu verändern oder zu löschen oder die Datenketten zu verwalten.

Die erfindungsgemäße Struktur der Datenbank erlaubt dem Eigentümer der Daten die freie Entscheidung, welche Daten er in die Datenblöcke einträgt, und über die Datenketten festzulegen, welchen anderen Nutzern er erlaubt, welche dieser Daten zu sehen.

Diese Struktur erlaubt es aber auch, bestimmte Datenblöcke und Datenketten so zu fixieren, dass ein nicht mehr abänderbarer Beweis entsteht zum Beispiel in Form einer Rechnung für ein zwischen Nutzern im Netzwerk abgewickeltes Geschäft oder jedwedes andere Zertifikat, wofür sich ein Nutzer beworben hat oder welches er von einem anderen Nutzer im System oder außerhalb des Systems erhalten hat, welches auch als Attribut im Netzwerk verwendet werden kann. Hierfür stellt das Datenbanksystem "Internal Ledgers" bereit. Diese Ledgers sind geschützte Speicherbereiche, die dort einmal abgelegte Datenblöcke mit deren Datenketten zwar für bestimmte berechtigte Nutzer einsehbar eventuell auch ausdruckbar machen, aber so schützen, dass sie dauerhaft nicht mehr veränderbar sind.

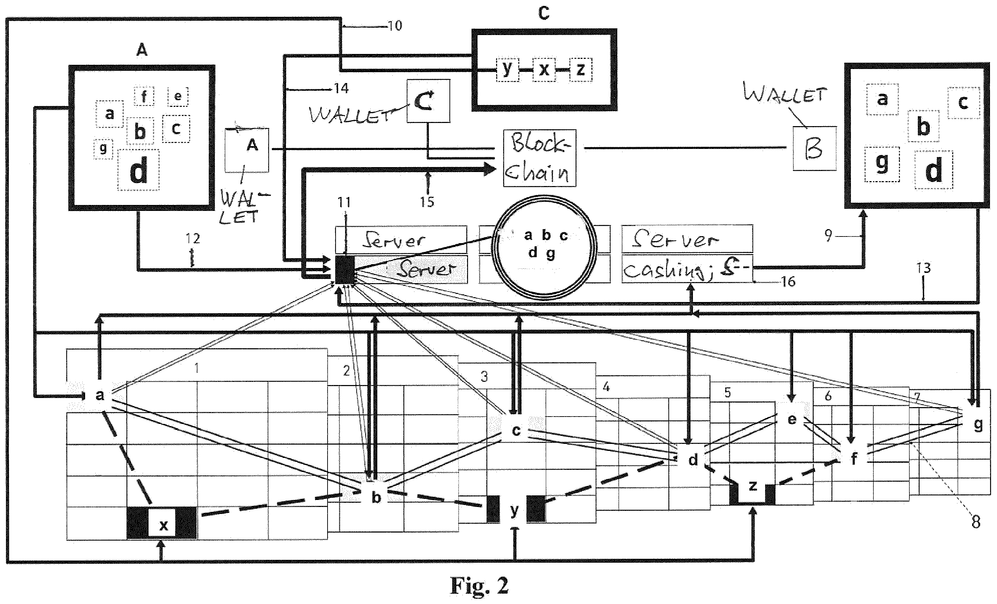

Hier bestätigt das System im sozialen Netzwerk, dass eine solche Bestätigung, eine Rechnung, ein internes oder ein externes oder Zertifikat erteilt oder jedwede Vereinbarung zwischen den Parteien getroffen wurde, indem es alle Datenblöcke mit allen Daten der beteiligten Nutzer verbunden über die entsprechenden Datenketten kopiert und an anderer Stelle des Systems ablegt, wo sie dann vom Eigentümer der Daten (oder jedem Dritten) nicht mehr verändert werden können. Diese da abgelegten Datenblöcke und Datenketten werden hier als Internal Receipt Ledger bezeichnet. Der Internal Receipt Ledger 11 (Fig. 2) kann von den beteiligten Nutzern hier jederzeit eingesehen aber eben nur mehr gelesen oder ausgedruckt, nicht mehr verändert werden. Die Ablage dieser Daten erfolgt im Datenbanksystem des sozialen Netzwerks in eigenen Tabellen der Datenbank, welche die benötigten Datenblöcke und deren Datenketten getrennt und nur für die am Vorgang beteiligten Nutzer einsehbar aber nun eben unveränderbar speichern.

Um solche Bestätigungen, Rechnungen oder Zertifikate noch sicherer und sie unabhängig von den Servern des sozialen Netzwerks zu machen, wird eine spezielle Blockchain-Technologie verwendet, die hier als External Receipt Ledger bezeichnet wird.

Weiter erfindungsgemäß wird eine Blockchain-Technologie verwendet, welche so genannte Masternodes und Nodes auf mehreren eigenen oder von anderen betriebenen Servern und Rechnern installiert und so sicherstellt, dass die Blockchain immer funktioniert, wenn z.B. mehr als 50 % dieser Server online sind. Diese Masternodes und Nodes stellen die externe Blockchain dar und generieren den notwendigen Public Key für den External Receipt Ledger. Nun können die Daten in Form von über Datenketten verbundene Datenblöcke des Internal Receipt Ledgers auf den External Receipt Ledger übertragen und so Teil des Public Keys und dieser Blockchain werden. Die Übertragung geschieht dadurch, dass die Inhalte der im Internal Receipt Ledger vorhandenen Datenblöcke mit den sie verbindenden Datenketten auf den lokalen Rechner des Nutzers übertragen werden. Dort werden sie mit dem Public Key der Blockchain hexadezimal verschlüsselt, und mit dem Private Key des / der berechtigten Nutzer verbunden. Dies geschieht idealerweise am Rechner des Nutzers, da der Server des Netzwerkes den Private Key des Nutzers nicht kennen soll. Das Ergebnis dieser Verschlüsselung kann dann wieder am Server gespeichert und auf der Blockchain veröffentlicht werden.

Damit ist sichergestellt, dass die entsprechenden Daten auf der Blockchain immer nur vom berechtigten Nutzer eingesehen werden können und auch das IRL-System des Netzwerkes die Private Keys der beteiligten Nutzer nicht kennt.

Bei einer Rechnung können nur die beteiligten Nutzer diese Rechnung im Internal Receipt Ledger sehen, bei einem Zertifikat, das veröffentlicht wird, können alle dies sehen, und bei einem internen Zertifikat innerhalb einer Gruppe oder Community nur die daran Beteiligten.

Die Übertragung der Inhalte eines Internal Receipt Ledgers auf einen External Receipt Ledger kann automatisch für alle entsprechend definierten Relationen oder bestimmte festgelegte Relationen des Internal Receipt Ledgers erfolgen oder nur dann, wenn einer der beteiligten Nutzer, dessen Datenblöcke und Datenketten und Aktionen (Relationen) zur Erstellung des Internal Receipt Ledgers verwendet wurden, sich entscheidet, die Daten bestehend aus Datenblöcken verbunden durch die entsprechenden Datenketten auf den Public Key des External Receipt Ledgers, also die Blockchain, zu übertragen. Das sind normalerweise die an der Aktion beteiligten Nutzer und alle externen Stellen oder anderen Nutzer, deren Datenblöcke und Datenketten am erstellten Ledger Agreement beteiligt waren, die hier als "autorisierte Nutzer" bezeichnet werden. Wann immer ein autorisierter Nutzer es wünscht, dass die im Internal Receipt Ledger gespeicherten Daten zusätzlich im External Receipt Ledger der Blockchain gespeichert werden, kann er das über einen Mausklick auslösen. Jeder der anderen autorisierten Nutzer kann das für sich später tun. Da die Daten aber bereits durch die Anforderung des ersten autorisierten Nutzers im dem durch den Public-Key-geschützten Teil des External Key Ledger vorhanden sind, wird dieser verwendet und, damit erhält der andere autorisierte Nutzer lediglich den Zugang zu diesem Public-Key-geschützten Teil über seinen Private Key.

Nun können alle autorisierten Nutzer, welche die Funktion der Übertragung vom Internal Receipt Ledger auf den External Receipt Ledger also die Blockchain für sich gewählt haben, diese Daten jederzeit über ihr Nutzerkonto im sozialen Netzwerk bereitgestellt am Internal Receipt Ledger oder eben auch unabhängig von den internen Servern über ihre Wallet und ihren Private Key am External Key Ledger die auf der Blockchain gespeicherten Daten einsehen. Eine spezielle Software, installiert auf der Wallet, erlaubt ihnen die Daten auf der Blockchain im selben Format wie auf ihrem Nutzerkonto im sozialen Netzwerk zu sehen auszudrucken und entsprechend zu verwenden.

Das System erlaubt es auch, bestimmte Informationen, die im Internal Receipt Ledger gespeichert sind zu verwalten, wie zum Beispiel den Zeitablauf eines bestimmten Zertifikates, zu hinterlegen. Jeder Ablauf oder jede Verlängerung oder Änderung des Zertifikates wird dann sowohl im Internal Receipt Ledger wie auch im Public Key des External Receipt Ledger auf der Blockchain entsprechend gespeichert.

Dieselbe Blockchain-Technologie wird auch verwendet, um Kryptowährungen auf verschiedenen Blockchains zu erzeugen, welche verschiedene Masternodes und Nodes auf verschiedenen oder denselben Peers oder Servern verwenden.

Die eigene Kryptowährung des sozialen Netzwerks läuft auf dieser technologischen Basis und erlaubt damit dem Nutzer, wenn er einmal seine Wallet eingerichtet hat, mit seinem Private Key den Public Key sowohl für die Kryptowährung als auch für den External Receipt Ledger zu verwenden.

Alle weiteren Kryptowährungen, die auf derselben technischen Basis auf verschiedenen Blockchains in Verbindung mit dem erfindungsgemäßen sozialen Netzwerk erstellt wurden, erlauben damit den Zugang über eine Wallet und einen Private Key und die Verbindung mit dem External Receipt Ledger des Netzwerkes.

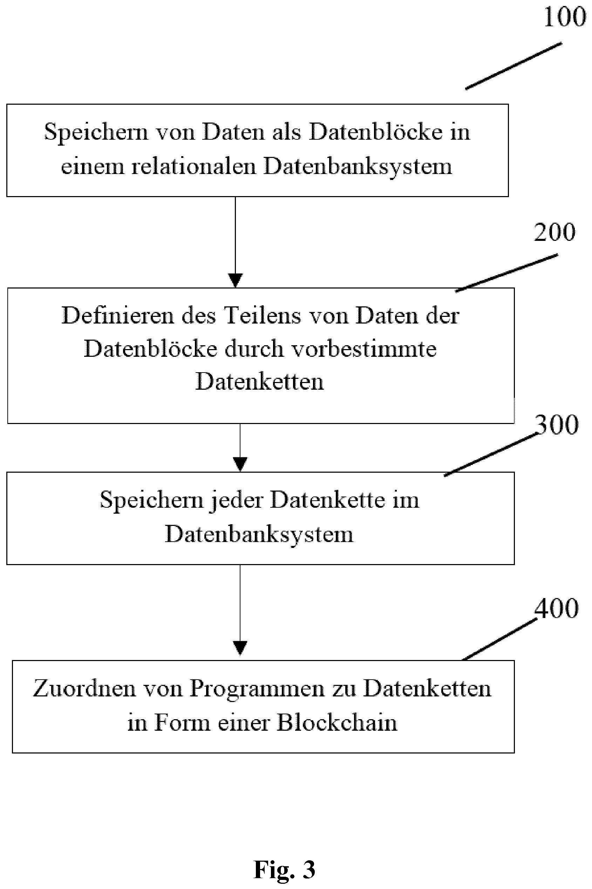

Fig. 3 illustriert das erfindungsgemäße Verfahren zum Bereitstellen eines sozialen Netzwerks, über welches eine Anzahl von Nutzern Daten miteinander teilen können, wobei
im Schritt 100 die einem Nutzer zugeordneten Daten als Datenblöcke in einem Datenbanksystem, insbesondere nach einem der vorherigen Ansprüche, gespeichert werden, wobei die einem Nutzer zugeordneten Datenblöcke ausschließlich von dem Nutzer verwaltet werden können,
im Schritt 200 das Teilen von Daten der Datenböcke zwischen Nutzern im Netzwerk durch vorbestimmte beziehungsweise festgelegte Datenketten definiert wird, wobei jede Datenkette Daten von den einem Nutzer zugeordneten Daten spezifiziert, die der Nutzer teilt, und den Nutzer spezifiziert, mit dem die Daten geteilt werden, wobei
im Schritt 300 jeder Datenblock gespeichert wird und ausschließlich von demjenigen Nutzer verwaltet werden kann, dem die Daten zugeordnet sind, die vorbestimmten Datenketten Programme umfassen, die Funktionen auf Basis der geteilten Daten ausführen, und wobei
im Schritt 400 zumindest einer vorbestimmten Datenkette ein Programm zugeordnet wird, das eine vorbestimmte Funktion auf Basis der geteilten Daten ausführt.

### Programm und Server

Eine Ausführungsform des erfindungsgemäßen sozialen Netzwerks verwendet für die relationale Datenbank PHP als Programmsprache und MySQL für das Datenmanagement über die Datenketten. Das Nachrichtensystem ist ebenfalls auf PHP programmiert, operiert aber auf einer Mongo-Datenbank über einen PHP Code.

Die Suchmaschine verwendet ebenfalls eigene Server mit einem Sphynx-Datenmanagement.

Das erfindungsgemäße soziale Netzwerk verwendet des Weiteren einen Caching Server (auf einem Radis-Betriebssystem) zur Zwischenspeicherung der einem Nutzer zugänglichen Datenblöcke und Datenketten (Relationen) während einer Sitzung, um das übrige Serversystem in Bezug auf einen bestimmten Nutzer und seine während einer Sitzung abgerufenen Daten zu entlasten

Die Verwendung eines Caching Server Systems 16 löst dieses Problem, da während einer Sitzung eines Nutzers alle dabei verwendeten Datenblöcke und Datenketten dort zwischengespeichert werden und nur für neue Datenblöcke und Datenketten ein erneuter und immer einmaliger Zugriff auf das gesamte Datenbanksystem erfolgt. Das Caching Server System 16 ist zwischen einem Nutzer (z.B. Nutzer B) und dem erfindungsgemäßen Datenbanksystem angeordnet.

Die im Caching Server zwischengespeicherten Daten werden mit Beendigung der jeweiligen Sitzung aus dem Caching Server System 16 endgültig gelöscht. Dieses System erlaubt eine effizientere Nutzung der Datenbank.

Ein Caching-System ist insbesondere in Kombination mit dem vorliegenden Datenbanksystem von besonderem Vorteil, da dieses vorrangig über die Datenketten funktioniert und wobei mit jeder Datenanfrage die dann alle daran hängenden Datenblöcke in eine URL verwandelt und auf den Rechner des anfragenden (klickenden) Nutzers gesendet werden. Hier wäre ein relationales Datenbanksystem alleine sehr rasch überfordert, denn relationale Datenbanken sind nicht dafür gemacht, gleichzeitig in dieser Art eine Vielzahl von Datenblöcken und Datenketten aktiv anfordernden Nutzern in der beschriebenen Art bedienen zu können.

Auf diese Weise kann das soziale Netzwerk zusammen mit einer Blockchain für das soziale Netzwerk mit einer relationalen Datenbank für die Nutzerdaten, die Profile der Nutzer inklusive der Beziehungen zwischen den Nutzern realisiert werden.

Damit ist sichergestellt, dass ein Nutzer während seiner Sitzung das Serversystem immer nur sehr kurzfristig und nur für neue Daten verwendet.

Des Weiteren lässt sich der Datenverkehr von/zum Nutzer besser kontrollieren, und das gesamte Datenbanksystem besser skalieren.

Schließlich verhindert ein Caching-System auch einen Crash des Datenbanksystems durch zu viel Verkehr. Zu viel Verkehr, führt lediglich zu einer längeren Wartezeit für die jeweiligen Nutzer. Die entsprechenden Datenblöcke und Datenketten werden mit Beendigung der Sitzung des jeweiligen Nutzers bzw. nach einem bestimmten Zeitraum seiner Inaktivität endgültig vom Caching Server gelöscht.

Die Caching-Technologie stellt auch sicher, dass während einer Sitzung stattfindende Änderungen auf Seiten des Eigentümers der Daten für den berechtigten Verwender nicht stattfinden und solche Änderungen erst in einer erneuten Sitzung schlagend werden.

Ein ähnliches System spezieller Server allerdings ohne ein solches Löschen nach der Sitzung oder Zeitablauf kann verwendet werden, um die Daten des Internal Receipt Ledgers oder Internal Agreement Ledgers zu speichern, um diese späteren Änderungen nicht auszusetzen und um sie dann, wenn die betroffenen Nutzer entscheiden, Daten der Datenblöcke und ihrer Datenketten mit dem Public Key der Blockchain hexadezimal zu verschlüsseln, und mit dem / den Private Keys des / der berechtigten Nutzer zu verbinden und so auf den Externen Receipt / Agreement Ledger zu senden und somit in die Blockchain zu überführen, wo dann die gewählten Aktivitäten und Daten unabänderlich gespeichert und dokumentiert werden. Solche Server können, müssen aber nicht, die Masternodes enthalten und als Nodes oder Peers der Blockchain mit dem External Receipt Ledger dienen. Die Daten des Internal Receipt / Agreement Ledgers sind jedenfalls dauerhaft auf den Servern des erfindungsgemäßen Netzwerks gespeichert. Sie können, müssen aber nicht von da verschlüsselt und auf den External Receipt Ledger, die Blockchain überführt werden.

Hier verwendet das erfindungsgemäße Netzwerk die SkyLedger-/ SkyFiber-Technologie und das System Obelisk. Dieses ermöglicht eine Vielzahl von Blockchains für weitere Kryptowährungen sowie alle möglichen Anwendungen zu installieren und alle auf ein und demselben Wallet über den Private Key zu öffnen.

Der Nutzer im erfindungsgemäßen Netzwerk befindet sich auf einer Oberfläche, die er von vergleichbaren sozialen Netzwerken und Online-Marktplätzen kennt, die Technik dahinter sieht aber wie oben beschrieben anders aus.

Damit stellt das erfindungsgemäße soziale Netzwerk dem Nutzer lediglich frei nutzbare Speicherplätze in der Datenbank zur Verfügung, welche er mit seinen Daten füllt. Er kann diese verwenden, wie er möchte, alles immer ändern oder löschen.

Des Weiteren kann er die Datenketten dafür verwenden, um festzulegen, was von seinen Daten andere Nutzer sehen können. Manche Datenketten bedürfen auch der Aktion der beiden jeweils beteiligten Nutzer im Sinne von Anfrage und Annahme (z.B. Freundschaftsverbindung).

Damit entsteht für jeden Datenblock und seinen jeweiligen Inhalt, welche an einer definierten Datenkette hängen, eine eigene Internet-Identität die definiert, welche Inhalte in welcher Form wem zur Verfügung gestellt werden.

Ein Klick bedeutet nun, dass der Rechner des anklickenden Nutzers alle für ihn vom Eigentümer der Daten freigegebenen Inhalte bestehend aus Text, Bildern, Links und Videos etc. gesendet bekommt und diese sich auf seinem Gerät zu dem Bild das er sieht zusammenbaut. Es ist dies ein durch alle verwendeten Daten eines Nutzers der Datenbank, die aufgerufen wurden, entstehendes Bild am Rechner des empfangenden Nutzers also eine Peer-to-Peer-Nutzung zwischen zwei agierenden Nutzern.

Jedes Bild ist, solange der gebende Nutzer nichts ändert, immer wieder dasselbe, definiert durch die URLs aus den Tabellen verbunden über die Datenketten.

Nur wenn die Interaktion der Nutzer zu einer Rechnung oder einer Zertifizierung oder Vereinbarung führt, die nicht mehr abänderbar sein soll, werden die an der entsprechenden Datenkette hängenden Datenblöcke fixiert und separat im Internal Receipt Ledger gespeichert, wo sie keine Änderungen der beteiligten Nutzer mehr erlaubt. Von da kann sie über Anforderung eines berechtigten Nutzers über den External Receipt Ledger auf die Blockchain gelegt werden.

### Ausführungsbeispiel

Die Datenbank des erfindungsgemäßen sozialen Netzwerks hat eine geographische Grundstruktur nach Ländern, Regionen und Städten und ist derzeit aktiv in z.B. 224 Ländern mit über 52.000 Städten. Diese Liste ist frei erweiterbar.

Dieses System erlaubt jedem Nutzer, seine eigenen Daten in die Tabellen, Zeilen und Spalten (Datenblöcke) einzutragen und darin zu verwalten und auch jederzeit zu ändern und zu löschen und diese Daten über die gewählten Datenketten zu vernetzen und so einem von ihm festgelegten und frei abänderbaren Nutzerkreis zugänglich zu machen. Jeder Nutzer verwaltet seine Daten selbst, sie gehören ihm, das erfindungsgemäße soziale Netzwerk stellt lediglich den Ablageplatz und Verkettungsmöglichkeiten zur Verfügung.

Technisch führt eine Aktion, z.B. ein Klick im Netzwerk, zu einer eigenen URL und damit Internet-Identität mit dem dahinterliegenden Befehl an das System, auf den Rechner des Nutzers alle für ihn erlaubten Inhaltspakete aus allen Tabellen, Zeilen und Spalten und entsprechend der vom Eigentümer der Daten festgelegten Datenketten auf seinen Rechner zu gesendet zu bekommen, um dort das Ergebnis zusammenzustellen und anzuzeigen.

Jeder Klick auf diese URL, zum Beispiel wenn diese URL im Netz geteilt wird, führt über die Verbindung der Datenblöcke über die Datenketten zum gleichen Ergebnis bei den so weil mit ihnen geteilt nun anfordernden Nutzern, immer aber und für jeden Nutzer nur für die Daten, deren Verwendung der Eigentümer der Daten über die festgelegten Datenketten zugestimmt hat.

Vertraulichkeitseinstellungen für die Datenblöcke und die Datenketten werden nur von demjenigen Nutzer, der Eigentümer der Daten ist, festgelegt, und alle Datenmanagement-Funktionen stehen nur dem Eigentümer der Daten zu. So kann er all seine Daten jederzeit ändern oder löschen wie auch sein gesamtes Profil, womit all seine Datenblöcke und Datenketten endgültig gelöscht werden.

Das ist der technische Unterschied zu allen anderen sozialen Netzwerken und Online-Marktplätzen. Das erfindungsgemäße soziale Netzwerk kann keine Nutzerdaten verwenden oder vermarkten und produziert keine Ergebnisse aus Algorithmen, welche dann anderen Nutzern angezeigt oder vermarktet werden - eben als Ergebnis eines Algorithmus, welchen die einzelnen Nutzerdaten durchlaufen und dessen Ergebnis anderen Nutzern angezeigt wird.

Das erfindungsgemäße Netzwerk stellt dem Nutzer die von ihm zu füllenden Datenblöcke in den Tabellen zur freien Verwendung zur Verfügung und vernetzt diese Inhaltspakete über Datenketten mit den von ihm gewählten anderen Nutzern.

Jeder Klick führt nun dazu, dass das Datenbanksystem die dem anfordernden (klickenden) Nutzer die Inhaltspakete bestehend aus Datenblöcken und Datenketten mit deren jeweiliger Identität auf seinen Rechner sendet und dort das Bild als Ergebnis der Datenkette entsteht. Er kann es nur sehen, nicht speichern.

Die Basis ist immer genau das, was der Eigentümer der Daten eingetragen und für andere Nutzer freigegeben hat.

Das erfindungsgemäße soziale Netzwerk deckt alle bekannten Online-Bedürfnisse auf einer einzigen Plattform ab wie Präsentation, Inhalte, Community und Community Management, Nachrichten und Kommunikation, Posten und Chatten sowie Online-Marketing auf den Ebenen Produkte, Service, Jobs und Immobilien, dies alles auf einer von den Nutzern frei wählbaren geografisch strukturierten Plattform mit automatischer Übersetzung von und in 106 Sprachen. Die Übersetzung erfolgt dadurch, dass dem jeweiligen Nutzer eine Funktion angeboten wird in welcher er entscheidet, die aus Text bestehenden Datenblöcke an den entsprechenden Datenketten auf seinem Gerät, bevor sie angezeigt werden, durch das Übersetzungswerkzeug zu leiten und eben dann in der von ihm gewählten Sprache anzuzeigen.

Dieses technische Konzept ist die einzige Möglichkeit totaler Datenkontrolle für alle eingegebenen Daten in einer frei zugänglichen sozialen Plattform. Es bietet den Nutzern auf einer Oberfläche alle Funktionen sozialer Netzwerke und Online-Marktplattformen gepaart mit totaler Datenkontrolle inklusive der Festlegung, wer die Daten sehen kann.

Das System des Internal Receipt / Agreement Ledgers ist für die Anwendungen, in welchen es einer finalen Fixierung der Inhalte der betreffenden Datenblöcke und Datenketten der beteiligten Nutzer bedarf, die einzige Möglichkeit dies in einem sonst wie oben beschriebenen durch den Eigentümer der Daten frei änderbaren System solche Fixierungen innerhalb des Systems durchzuführen und diese nur für die ursprünglich beteiligten Nutzer zugänglich zu machen.

Das technische Konzept des Internal Receipt / Agreement Ledgers in welchem die Informationen der beteiligten Nutzer in Form von Datenblöcken verbunden über Datenketten abgelegt sind, erlaubt die entsprechende hexadezimale Verschlüsselung und beschriebene Überführung auf eine Blockchain.

So werden jede Art von Vereinbarungen, Bestätigungen und Belegen in eine Blockchain überführt und da verwaltet. In Verbindung mit Kryptowährungen wird damit sowohl der Beleg für die Transaktion sowie der Zahlungsvorgang im selben Waller verwaltet und angezeigt.

### Weitere Vorteile des erfindungsgemäßen Systems

Dieses System des Abrufens der Information auf den eigenen Rechner erlaubt auch Anwendungen, die andere Netzwerke so nicht bieten können.
- Automatischen Posten in anderen Netzwerken. Hier werden die notwendigen Daten automatisch in das Posting-Formular des jeweiligen anderen Netzwerkes eingegeben.
- Automatsches Anzeigen aller Textfelder in einer von 106 Sprachen. Dies geschieht durch einen auf dem erfindungsgemäßen sozialen Netzwerk zu aktivierenden Link, in welcher Sprache der Nutzer alle Inhalte lesen möchte, und Senden dieser Daten über die Datenkette durch das Übersetzungsprogramm, bevor es auf seinem Gerät angezeigt wird.
- Ein Multi Level Marketing Programm zur Vermarktung der Leistungen des erfindungsgemäßen sozialen Netzwerkes, wobei jeder, der seine Community auf das erfindungsgemäße Netzwerk mitbringt, auf Dauer an allen Einnahmen des sozialen Netzwerkes von diesen Nutzern und deren Nutzern über 5 Ebenen partizipiert.
- Jede Art von Zertifizierung und entsprechender Auswahl und Zuordnung
- Das System von über Datenketten verbundenen Datenblöcken ermöglichet es auch für spezielle Nutzer eigene zusätzliche überlagernde Datenketten einzurichten.
- Jede Art weiterer nutzerorientierter Multi Level Marketing und Agenturvertriebe über entsprechend festgelegte kundenbezogene Datenketten.
- Kauf und Abrechnung von Leistungen über die eigene Kryptowährung oder Kryptowährungen von Dritten.
- Gewinnbeteiligung von Vertriebsagenten in Kryptowährung
- Teilen der Einnahmen des Netzwerkes z.B. für Werbung mit den Produzenten der Inhalte zu denen diese Werbung angezeigt wird (Blogger Reward System)
- Anzeigen aller Inhalte in einer vom Eigentümer der Daten frei wählbaren Geografie eventuell verbunden mit Angeboten definierter (zertifizierter) Verkäufer unter einer speziell programmierten Datenkette mit dem Entsprechenden System von smart Contracts zwischen solchen Verkäufern und im System festgelegten Vertriebspartnern.

So können alle Nutzer die sich über einen bestimmten Nutzer anmelden mit diesem über die angebotenen Basis-Datenketten hinaus in jeder Weise verbunden werden.

Die Blockchain-Technologie in dem erfindungsgemäßen sozialen Netzwerk wurde eingangs beschrieben und ermöglicht unter anderem folgende Anwendungen:

### Blockchain und Kryptowährungen

Das erfindungsgemäße soziale Netzwerk betreibt seine eigene Kryptowährung als so genannten In Use Token, welcher für alle von dem erfindungsgemäßen sozialen Netzwerk selbst angebotenen Leistungen als Zahlungsmittel Verwendung findet.

Die gleiche Technologie ermöglicht es auch für bestimmte Nutzer des erfindungsgemäßen sozialen Netzwerks, ihre eigenen Kryptowährungen zu erstellen und im dem erfindungsgemäßen sozialen Netzwerk zu betreiben. Das kann z.B. der geplante Entwicklungshilfetoken als Parallel-Währung zum Erreichen der von den vereinten Nationen beschlossenen 17 SDGs sein, oder auch spezielle Kryptowährungen von NGOs, die keine Parallel-Währung bilden sondern Spendengelder nur für eine bestimmte Verwendung in eine Kryptowährung umwandeln und bei vertragsgemäßer, also autorisierter Verwendung, deren späteren Umtausch in das Spendengeld vorsehen.

### Smart Agreements und Smart Contracts

Die Technologie des erfindungsgemäßen sozialen Netzwerks erlaubt es über die Datenblöcke und Datenketten auf dem so genannten Internal Receipt Ledger entstandene Bestätigungen wie Rechnungen oder Zertifikate oder jede Art einer Vereinbarung auf Wunsch der Beteiligten und berechtigten Nutzer auf einen External Receipt Ledger in Form einer Blockchain zu überführen, und damit auf einer Wallet der jeweiligen berechtigten Nutzer unabänderlich und sichtbar zu machen und da zu verwalten. Darüber hinaus besteht auch die Möglichkeit, ein solches Smart Agreement / Smart Contract für alle Nutzer sichtbar zu machen.

### Umfassend verwendbare Wallet

Es wird für jeden Nutzer eine Wallet bereitgestellt, in welchem der Nutzer Währungstransaktionen mit den im System berechtigten Kryptowährungen mit anderen Nutzern, über eine Blockchain durchführen und/oder eine Kryptowährung verwalten kann.

Der Nutzer kann auf seiner Wallet über seinen Privat Key alle Blockchain-Inhalte auf verschiedenen Public Keys verschiedener Blockchains und Masternodes und damit alle seine Daten am Externen Receipt Ledger und alle Kryptowährungen, die auf Blockchains des erfindungsgemäßen sozialen Netzwerk laufen, verwalten.

### Weitere mögliche Anwendungen

Die Anwendungsmöglichkeiten sind sehr umfangreich, erlaubt das System doch die totale Datensicherheit und Datenkontrolle durch den Nutzer sowie, wenn immer die beteiligten Nutzer das wünschen, die Erstellung eines unabänderlichen Beleges oder Bestätigung einer Zertifizierung im Server-System des erfindungsgemäßen sozialen Netzwerks über den so genannten Internal Receipt Ledger. Die da festgehaltenen Daten können, wenn gewünscht, auf eine Blockchain überführt werden, wo diese Information dann auch außerhalb des Server Systems des erfindungsgemäßen sozialen Netzwerks für immer aber eben nur sichtbar für die berechtigten Nutzer gespeichert und bestätigt wird.

Die Verwendung der Blockchain für Kryptowährungen und die Verbindung mit der sehr umfassenden Abwicklungsoberfläche des erfindungsgemäßen sozialen Netzwerks ermöglicht unzählige weitere Anwendungsmöglichkeiten.

Dies und die Möglichkeit, im erfindungsgemäßen sozialen Netzwerk über die bestehenden Datenketten zusätzliche Datenketten für ausgewählte Nutzer zu schaffen, eröffnet zahllose heute noch nicht absehbare mögliche Anwendungen speziell für sehr komplexe Communities mit sehr komplexen Aufgaben.

### Anwendungsbeispiel Entwicklungshilfetoken

Bekanntlich diskutieren die Vereinten Nationen unter anderem zur Bewältigung der Armut über die 17 Special Development Goals (SDGs) völlig neuartige Lösungen, welche eine spezielle Nutzeroberfläche kombiniert mit der Blockchain-Technologie erfordern. Dafür ist geplant, einen sogenannten SDG-Token als eine nicht mit echtem Geld hinterlegte Parallel-Währung einzuführen.

Darüber hinaus wollen viele Nichtregierungsorganisationen (NGOs) ihre eigenen Tokens welche mit Spendengeldern hinterlegt und wie eine dagegen einlösbarer Voucher fungieren. Dafür benötigt man nicht nur die Erstellung eines jeweils eigenen Tokens mit einer jeweils eigenen Blockchain sondern auch die vom erfindungsgemäßen Netzwerk angebotene Oberfläche und Technologie und die beschriebenen Möglichkeiten des Internal und External Receipt Ledgers.

Eine Lösung unter Verwendung des erfindungsgemäßen sozialen Netzwerks kann wie folgt aussehen:
- Erstellen eines SDG-Tokens auf der Blockchain des erfindungsgemäßen sozialen Netzwerks, als echte Parallel-Währung
- Erstellen weiterer NGO-Tokens, welche direkt und mit Entwicklungshilfe- oder Spendengeldgeld hinterlegt werden. Das geschieht bei den oben genannten NGO-Tokens, die wie ein Voucher dienen. Der SDG-Token hat keine Rücktauschmöglichkeit, er ist eine Parallelwährung, die mit keinem realen Geld hinterlegt ist.
- Die möglichen Empfänger dieser SDG-/ NGO-Tokens werden über lokale Stellen oder NGOs gefunden, melden sich in dem erfindungsgemäßen sozialen Netzwerk an und werden entsprechend hier zertifiziert als ausgewählte Empfänger dieser Tokens.
- Um sicherzustellen, dass die Tokens im Sinne der SDGs / jeweiligen NGO und von den jeweils Berechtigten verwendet werden, melden sich Anbieter der Produkte und Services im erfindungsgemäßen sozialen Netzwerk an und werden mit diesen, so sie den SDGs / Richtlinien der jeweiligen NGO entsprechen ihrerseits in dem erfindungsgemäßen sozialen Netzwerk zertifiziert.
- Nun können alle Inhaber der Tokens diese für alle im Sinn der SDG's / Richtlinien der jeweiligen NGO zertifizierten Produkte und Services verwenden.
- Die Qualität dieser Produkte und Services wird über die Zertifizierung der Anbieter gewährleistet, bei Beschwerden wird diese entzogen.
- Das System des erfindungsgemäßen sozialen Netzwerks bietet für diese Abwicklung eine einzigartige Oberfläche mit allen notwendigen Funktionen.
- Die Geo-Selection ist sehr wichtig, können damit alle Nutzer einfach sehen, welche Produkte und Leistungen gegen ihre Tokens in ihrem Ort angeboten werden.
- Die automatische Übersetzung von und in 106 Sprachen ist eine weitere unabdingbare Voraussetzung, welche heute nur das erfindungsgemäße sozialen Netzwerks in dieser Form bietet.
- Die so direkt den Bedürftigen gegebenen und zu deren Vorteil und im Sinne der SDGs / Richtlinien der jeweiligen NGO verwendeten Tokens können von den zertifizierten Lieferanten im Fall der NGO-Token bei der jeweiligen NGO gegen die hinterlegte Währung eingetauscht werden, damit werden sie vernichtet. Wenn die Tokens als echte Parallel-Währung wie im Fall der SDG Tokens gestaltet sind, bleiben sie als solche im System. Das Mining geschah hier durch die Zertifizierung eines bedürftigen Nutzers, und die Verwendung ist nur bei entsprechenden zertifizierten Anbietern und für einen festgelegten Warenkorb zum Decken von Grundbedürfnissen vorgesehen. Solche Grundbedürfnisse haben auch weitere Personen entlang der Wertschöpfungskette.
- Die Tokens können von den Lieferanten aber auch gehalten und / oder müssen im Fall des SDG-Token im System weiterverwendet werden, was in vielen dieser von Inflation geplagten Ländern einen zusätzlichen Effekt der Inflationsbekämpfung gibt.
- Der jeweilige Staat kann über ein einfaches Steuersystem auch was die anfallenden Steuern auf solche Transaktionen mit den Tokens betrifft befriedigt werden, indem z.B. ein bestimmter Prozentsatz jedes Token bei Verwendung als Steuer vom Staat bei der UN gegen das hinterlegte Geld eingelöst werden kann.

Das ist nur ein Beispiel, welches aufzeigt, wie einzigartig und enorm leistungsstark das System des erfindungsgemäßen sozialen Netzwerks in Verbindung mit der Internal Receipt Ledger und der damit verbundenen Smart Contract / Smart Agreement Blockchain-Technologie ist.

## Patentansprüche

1. Relationales Datenbanksystem für ein soziales Netzwerk, über welches eine Anzahl von Nutzern Daten miteinander teilen können, wobei
die Daten in Datenblöcken in Tabellen mit einer Vielzahl von Zeilen gespeichert sind,
die einem Nutzer zugeordneten Daten als die Datenblöcke im Datenbanksystem gespeichert sind,
die einem Nutzer zugeordneten Datenblöcke ausschließlich von dem Nutzer verwaltet werden können,
das Teilen von Daten der Datenböcke zwischen Nutzern im sozialen Netzwerk durch vorbestimmte Datenketten definiert ist, wobei jede Datenkette Daten von den einem Nutzer zugeordneten Daten spezifiziert, die der Nutzer teilt, und denjenigen Nutzer spezifiziert, mit dem die Daten geteilt werden, wobei
jede Datenkette somit auch eine Verbindung zwischen den Nutzern repräsentiert und die Datenketten netzwerkintern gebildet sind, wobei jede Datenkette als eine Tabelle im relationalen Datenbanksystem gespeichert ist und ausschließlich von demjenigen Nutzer verwaltet werden kann, dem die Daten zugeordnet sind,
wobei durch das Teilen eine neue Tabelle mit den Daten entsprechend der Datenkette entsteht,
wobei die Datenkette mit den entsprechenden Datenblöcken so fixierbar ist, dass sie von keinem Nutzer abgeändert werden kann,
und wobei zumindest einer Datenkette ein Programm zugeordnet ist, das vorbestimmte Funktionen auf Basis der durch die Datenkette spezifizierten Daten ausführt.

2. Datenbanksystem nach Anspruch 1, wobei die netzwerkinterne Datenkette mit den entsprechenden Datenblöcken als Blockchain netzwerkextern gebildet ist.

3. Datenbanksystem nach einem der vorherigen Ansprüche, wobei eine der Funktionen einen Smart Contract oder ein Smart Agreement zwischen zwei Nutzern realisiert.

4. Datenbanksystem nach dem vorherigen Anspruch, wobei die Fixierbarkeit der Datenblöcke und/oder der Verkettungen in der Weise sichergestellt ist, dass die Datenblöcke und/oder Verkettungen kopiert und an einer vorbestimmten Stelle (11) im Netzwerk gespeichert sind, wo sie durch die Nutzer nicht mehr änderbar sind.

5. Datenbanksystem nach dem vorherigen Anspruch, wobei die an der vorbestimmten Stelle (11) im Netzwerk gespeicherten Datenblöcke und Datenketten (Relationen) verschlüsselt gespeichert sind, derart, dass nur autorisierte Nutzer auf die gespeicherten Relationen zugreifen können.

6. Datenbanksystem nach einem der vorherigen Ansprüche, wobei Datenblöcke und/oder Datenketten, die ein Nutzer als nicht abänderbar gespeichert haben möchte, in einem vorbestimmten Bereich des Datenbanksystems gespeichert sind und nur für vorbestimmte Nutzer zugreifbar sind.

7. Datenbanksystem nach dem vorherigen Anspruch, wobei die nicht abänderbaren Datenblöcke und/oder Datenketten verschlüsselt und auf eine Blockchain übergeführt sind.

8. Datenbanksystem nach einem der vorherigen Ansprüche, weiter aufweisend:
ein Caching-System (16), das einem Nutzer des Datenbanksystems zugeordnet ist und ausgestaltet ist, dass die Datenblöcke verbunden über die Datenketten, die von dem Nutzer während einer Sitzung von dem Datenbanksystem abgerufen werden, zwischenzuspeichern und zum erneuten Abrufen durch den Nutzer während der Sitzung vorzuhalten.

9. Datenbanksystem nach einem der vorherigen Ansprüche, weiter aufweisend:
ein Internes Ledger-System, das ausgestaltet ist, Inhalte als Datenblöcke verbunden über Relationen innerhalb des Datenbanksystems von den Nutzern unveränderbar zu speichern.

10. Datenbanksystem nach einem der vorherigen Ansprüche, weiter aufweisend:
ein Externes Ledger-System, das ausgestaltet ist, Relationen entsprechend Anspruch 9 in eine Blockchain außerhalb des Datenbanksystems zu überführen und dort von den Nutzern unveränderbar zu speichern.

11. Datenbanksystem nach einem der Ansprüche 9 bis 10, wobei:
das Datenbanksystem ausgestaltet ist, Datenblöcke des Internen Ledger-Systems mit den sie verbindenden Datenketten auf den Rechner eines Nutzers zu übertragen, um diese dort mit einem Schlüssel der Blockchain zu verschlüsseln um mit dem Private Key des Nutzers verbunden werden.

12. Verfahren zum Bereitstellen eines sozialen Netzwerks, über welches eine Anzahl von Nutzern Daten miteinander teilen können, wobei
die Daten in Datenblöcken in Tabellen mit einer Vielzahl von Zeilen gespeichert sind,
die einem Nutzer zugeordneten Daten als die Datenblöcke in einem relationalen Datenbanksystem, insbesondere nach einem der vorherigen Ansprüche, gespeichert werden,
wobei die einem Nutzer zugeordneten Datenblöcke ausschließlich von dem Nutzer verwaltet werden können,
wobei das Teilen von Daten der Datenböcke zwischen Nutzern im Netzwerk durch vorbestimmte Datenketten definiert wird, wobei jede vorbestimmte Datenkette Daten von den einem Nutzer zugeordneten Daten spezifiziert, die der Nutzer teilt, und den Nutzer spezifiziert, mit dem die Daten geteilt werden, wobei
jede Datenkette somit auch eine Verbindung zwischen den Nutzern repräsentiert und die Datenketten netzwerkintern gebildet werden, wobei jede Datenkette als eine Tabelle im relationalen Datenbanksystem gespeichert wird und ausschließlich von demjenigen Nutzer verwaltet werden kann, dem die Daten zugeordnet sind,
wobei durch das Teilen eine neue Tabelle mit den Daten entsprechend der Datenkette entsteht,
wobei die Datenkette mit den entsprechenden Datenblöcken so fixierbar ist, dass sie von keinem Nutzer abgeändert werden kann,
und wobei zumindest einer vorbestimmte Datenkette ein Programm zugeordnet wird, das eine vorbestimmte Funktion auf Basis der geteilten Daten ausführt.

13. Verfahren nach Anspruch 12, wobei die netzwerkinterne Datenkette mit den entsprechenden Datenblöcken als Blockchain netzwerkextern gebildet ist.

14. Verfahren nach einem der Ansprüche 12 bis 13, wobei eine der Funktionen einen Smart Contract oder ein Smart Agreement zwischen zwei Nutzern realisiert.

15. Verfahren nach dem vorherigen Anspruch, wobei die Fixierbarkeit der Datenblöcke und/oder der Verkettungen in der Weise sichergestellt wird, dass die Datenblöcke und/oder Verkettungen kopiert und an einer vorbestimmten Stelle (11) im Netzwerk gespeichert sind, wo sie durch die Nutzer nicht mehr änderbar sind.

## Claims

1. Relational database system for a social network via which a number of users can share data with one another, wherein
the data is stored in data blocks in tables having a plurality of rows,
the data assigned to a user is stored as the data blocks in the database system,
the data blocks assigned to a user can be managed exclusively by the user,
the sharing of data of the data blocks between users in the social network is defined by predetermined data chains, wherein each data chain specifies data from the data assigned to a user that the user shares and specifies the user with whom the data is shared, wherein
each data chain thus also represents a connection between the users, and the data chains are formed internally in the network, wherein
each data chain is stored as a table in the relational database system and can be managed exclusively by the user to whom the data is assigned,
wherein the sharing creates a new table with the data according to the data chain,
wherein the data chain with the corresponding data blocks can be fixed such that it cannot be modified by any user,
and wherein at least one data chain is assigned to a program which executes predetermined functions on the basis of the data specified by the data chain.

2. Database system according to claim 1, wherein the network-internal data chain with the corresponding data blocks is formed as a blockchain externally to the network.

3. Database system according to any of the preceding claims, wherein one of the functions produces a smart contract or a smart agreement between two users.

4. Database system according to the preceding claim, wherein the fixability of the data blocks and/or the concatenations is ensured in such a way that the data blocks and/or concatenations are copied and stored at a predetermined location (11) in the network where they can no longer be changed by the users.

5. Database system according to the preceding claim, wherein the data blocks and data chains (relations) stored at the predetermined location (11) in the network are stored in encrypted form such that only authorized users can access the stored relations.

6. Database system according to any of the preceding claims, wherein data blocks and/or data chains which a user wishes to have stored as non-modifiable are stored in a predetermined region of the database system and are accessible only to predetermined users.

7. Database system according to the preceding claim, wherein the non-modifiable data blocks and/or data chains are encrypted and transferred to a blockchain.

8. Database system according to any of the preceding claims, further comprising:
a caching system (16) which is assigned to a user of the database system and is designed to temporarily store the data blocks, connected via the data chains retrieved by the user from the database system during a session, and to keep them available for retrieval by the user during the session.

9. Database system according to any of the preceding claims, further comprising:
an internal ledger system which is designed to store content as data blocks connected via relations within the database system in a way that is unchangeable by the users.

10. Database system according to any of the preceding claims, further comprising:
an external ledger system which is designed to transfer relations according to claim 9 into a blockchain outside the database system and to store them there in a way that is unchangeable by the users.

11. Database system according to either of claims 9 to 10, wherein:
the database system is designed to transfer data blocks of the internal ledger system together with the data chains connecting them to a user's computer in order to encrypt them there with a key of the blockchain and to link them to the user's private key.

12. Method for providing a social network via which a number of users can share data with one other, wherein
the data is stored in data blocks in tables having a plurality of rows,
the data assigned to a user is stored as the data blocks in a relational database system, in particular according to any of the preceding claims,
wherein the data blocks assigned to a user can be managed exclusively by the user,
wherein the sharing of data of the data blocks between users in the network is defined by predetermined data chains, wherein each predetermined data chain specifies data from the data assigned to a user that the user shares and specifies the user with whom the data is shared, wherein
each data chain thus also represents a connection between the users, and the data chains are formed internally in the network, wherein
each data chain is stored as a table in the relational database system and can be managed exclusively by the user to whom the data is assigned,
wherein the sharing creates a new table with the data according to the data chain,
wherein the data chain with the corresponding data blocks can be fixed such that it cannot be modified by any user,
and wherein at least one predetermined data chain is assigned to a program which executes a predetermined function on the basis of the shared data.

13. Method according to claim 12, wherein the network-internal data chain with the corresponding data blocks is formed as a blockchain externally to the network.

14. Method according to either of claims 12 to 13, wherein one of the functions produces a smart contract or a smart agreement between two users.

15. Method according to the preceding claim, wherein the fixability of the data blocks and/or the concatenations is ensured in such a way that the data blocks and/or concatenations are copied and stored at a predetermined location (11) in the network where they can no longer be changed by the users.

## Revendications

1. Système de base de données relationnel pour un réseau social, par l'intermédiaire duquel un certain nombre d'utilisateurs peuvent partager des données entre eux, dans lequel
les données sont stockées en blocs de données dans des tableaux comportant une pluralité de lignes,
les données associées à un utilisateur sont stockées sous forme de blocs de données dans le système de base de données,
les blocs de données associés à un utilisateur ne peuvent être gérés que par cet utilisateur,
le partage de données des blocs de données entre des utilisateurs dans le réseau social est défini par des chaînes de données prédéterminées, dans lequel chaque chaîne de données spécifie des données parmi les données associées à un utilisateur, données que l'utilisateur partage et qui spécifient l'utilisateur avec lequel les données sont partagées, dans lequel
chaque chaîne de données représente ainsi également une connexion entre les utilisateurs et les chaînes de données sont formées de manière à être internes au réseau, dans lequel
chaque chaîne de données est stockée sous la forme d'un tableau dans le système de base de données relationnel et ne peut être gérée que par l'utilisateur auquel les données sont associées,
dans lequel un nouveau tableau comportant les données correspondant à la chaîne de données est créé au moyen du partage,
dans lequel la chaîne de données comportant les blocs de données correspondants peut être fixée de sorte qu'elle ne peut être modifiée par aucun utilisateur,
et dans lequel un programme est associé à au moins une chaîne de données, lequel programme exécute des fonctions prédéterminées sur la base des données spécifiées par la chaîne de données.

2. Système de base de données selon la revendication 1, dans lequel la chaîne de données interne au réseau et comportant les blocs de données correspondants est formée sous la forme d'une chaîne de blocs externe au réseau.

3. Système de base de données selon l'une des revendications précédentes, dans lequel l'une des fonctions réalise un contrat intelligent ou un accord intelligent entre deux utilisateurs.

4. Système de base de données selon la revendication précédente, dans lequel la possibilité de fixation des blocs de données et/ou des enchaînements est assurée de telle sorte que les blocs de données et/ou les enchaînements sont copiés et stockés à un emplacement (11) prédéterminé dans le réseau, où ils ne peuvent plus être modifiés par les utilisateurs.

5. Système de base de données selon la revendication précédente, dans lequel les blocs de données et chaînes de données (relations) stockés à l'emplacement (11) prédéterminé dans le réseau sont stockés de manière cryptée, de telle sorte que seuls des utilisateurs autorisés peuvent accéder aux relations stockées.

6. Système de base de données selon l'une des revendications précédentes, dans lequel des blocs de données et/ou des chaînes de données qu'un utilisateur souhaite voir stockés de manière non modifiable sont stockés dans une zone prédéterminée du système de base de données et ne sont accessibles que par des utilisateurs prédéterminés.

7. Système de base de données selon la revendication précédente, dans lequel les blocs de données et/ou chaînes de données non modifiables sont cryptés et transférés sur une chaîne de blocs.

8. Système de base de données selon l'une des revendications précédentes, présentant en outre :
un système de mise en cache (16) qui est associé à un utilisateur du système de base de données et qui est configuré pour stocker temporairement les blocs de données connectés par l'intermédiaire des chaînes de données consultées par l'utilisateur à partir du système de base de données pendant une session, et pour les conserver en vue d'une nouvelle consultation par l'utilisateur pendant la session.

9. Système de base de données selon l'une des revendications précédentes, présentant en outre :
un système de registre interne qui est configuré pour stocker, de manière non modifiable par les utilisateurs, des contenus sous forme de blocs de données connectés par l'intermédiaire de relations au sein du système de base de données.

10. Système de base de données selon l'une des revendications précédentes, présentant en outre :
un système de registre externe qui est configuré pour transférer des relations correspondant à la revendication 9 dans une chaîne de blocs en dehors du système de base de données et pour les y stocker de manière non modifiable par les utilisateurs.

11. Système de base de données selon l'une des revendications 9 à 10, dans lequel :
le système de base de données est configuré pour transmettre, à l'ordinateur d'un utilisateur, des blocs de données du système de registre interne avec les chaînes de données qui les connectent, afin que lesdits blocs de données y soient cryptés avec une clé de la chaîne de blocs afin d'être connectés à la clé privée de l'utilisateur.

12. Procédé permettant de mettre à disposition un réseau social par l'intermédiaire duquel un certain nombre d'utilisateurs peuvent partager des données entre eux, dans lequel
les données sont stockées en blocs de données dans des tableaux comportant une pluralité de lignes,
les données associées à un utilisateur sont stockées sous forme de blocs de données dans un système de base de données relationnel, en particulier selon l'une des revendications précédentes,
dans lequel les blocs de données associés à un utilisateur ne peuvent être gérés que par cet utilisateur,
dans lequel le partage de données des blocs de données entre des utilisateurs dans le réseau est défini par des chaînes de données prédéterminées, dans lequel chaque chaîne de données prédéterminée spécifie des données parmi les données associées à un utilisateur, données que l'utilisateur partage et qui spécifient l'utilisateur avec lequel les données sont partagées, dans lequel
chaque chaîne de données représente ainsi également une connexion entre les utilisateurs et les chaînes de données sont formées de manière à être internes au réseau, dans lequel
chaque chaîne de données est stockée sous la forme d'un tableau dans le système de base de données relationnel et ne peut être gérée que par l'utilisateur auquel les données sont associées,
dans lequel un nouveau tableau comportant les données correspondant à la chaîne de données est créé au moyen du partage,
dans lequel la chaîne de données comportant les blocs de données correspondants peut être fixée de sorte qu'elle ne peut être modifiée par aucun utilisateur,
et dans lequel un programme est associé à au moins une chaîne de données prédéterminée, lequel programme exécute une fonction prédéterminée sur la base des données partagées.

13. Procédé selon la revendication 12, dans lequel la chaîne de données interne au réseau et comportant les blocs de données correspondants est formée en tant que chaîne de blocs externe au réseau.

14. Procédé selon l'une des revendications 12 à 13, dans lequel l'une des fonctions réalise un contrat intelligent ou un accord intelligent entre deux utilisateurs.

15. Procédé selon la revendication précédente, dans lequel la possibilité de fixation des blocs de données et/ou des enchaînements est assurée de telle sorte que les blocs de données et/ou les enchaînements sont copiés et stockés à un emplacement (11) prédéterminé dans le réseau, où ils ne peuvent plus être modifiés par les utilisateurs,
